# EUROPÄISCHE PATENTANMELDUNG

(11) **EP 0 930 253 A1**
(43) Veröffentlichungstag der Anmeldung: **21.07.1999**
(21) Anmeldenummer: 99100824.4
(22) Anmeldetag: 18.01.1999
(51) Int. Cl.: B65G 47/22, G01B 11/04

(54) **Verfahren und Vorrichtung zum Ausrichten und Vermessen eines Gegenstands**

(30) Priorität: 19.01.1998 DE 19801781
(71) Anmelder: ALPENLAND MASCHINENBAU HAIN & CO. KG, 83543 Rott am Inn (DE)
(72) Erfinder: Krebs, Karl-Heinz, 83109 Grosskarolinenfeld (DE); Eisner, Georg, 83125 Eggstätt (DE)
(74) Vertreter: Pellkofer, Dieter Dr.

(57) **Zusammenfassung**

Die Erfindung betrifft ein Verfahren zur Vorbereitung des Bearbeitens eines Gegenstands (17, 18) in einer Bearbeitungseinrichtung, insbesondere einer Schneideinrichtung (38), bei dem zunächst der Gegenstand (17, 18) auf einem zu einer Bewegung in Richtung der Bearbeitungseinrichtung (38) antreibbaren Zuführband (11) bezüglich der Bewegungsrichtung des Zuführbands ausgerichtet wird, und bei dem anschließend die Erstrekkung des Gegenstands (17, 18) in Bewegungsrichtung des Zuführbands (11) gemessen wird, während der Gegenstand (17, 18) sich zumindest teilweise auf dem Zuführband (11) befindet. Die Erfindung betrifft ferner eine Vorrichtung zur Durchführung dieses Verfahrens.

## Beschreibung

Die Erfindung betrifft ein Verfahren und eine Vorrichtung zur Vorbereitung des Bearbeitens eines Gegenstands in einer Bearbeitungseinrichtung, insbesondere einer Schneideinrichtung.

Derartige Verfahren bzw. Vorrichtungen dienen zur Durchführung von die Bearbeitung des Gegenstands vorbereitenden Schritten, wie beispielsweise der Charakterisierung oder Identifizierung des zu bearbeitenden Gegenstands. Falls es sich bei dem Gegenstand um ein Lebensmittelprodukt handelt, das in der Bearbeitungseinrichtung in gewichtsgenaue Stücke geschnitten werden soll, kann es beispielsweise erforderlich sein, die Abmessungen oder das Gewicht des Gegenstands zu kennen und den Gegenstand in besonderer Weise der Bearbeitungseinrichtung zuzuführen. Bekannte Verfahren bzw. Vorrichtungen besitzen den Nachteil, daß sie die Vorbereitung des Bearbeitens des Gegenstands nicht mit hinreichender Genauigkeit und Schnelligkeit ermöglichen.

Es ist eine Aufgabe der Erfindung, ein Verfahren und eine Vorrichtung zu schaffen, durch das bzw. die der Gegenstand mit hoher Geschwindigkeit, geringem Aufwand sowie hinreichender Genauigkeit für das nachfolgende Bearbeiten vorbereitet wird, so daß das Bearbeiten mit hoher Leistung und geringem Ausschuß möglich ist.

Die Aufgabe wird durch ein Verfahren gelöst, bei dem zunächst der Gegenstand auf einem zu einer Bewegung in Richtung der Bearbeitungseinrichtung antreibbaren Zuführband bezüglich der Bewegungsrichtung des Zuführbands ausgerichtet wird, und bei dem anschließend die Erstrekkung des Gegenstands in Bewegungsrichtung des Zuführbands gemessen wird, während der Gegenstand sich zumindest teilweise auf dem Zuführband befindet.

Durch dieses Verfahren wird also ein nachfolgendes Bearbeiten des Gegenstands vorbereitet, indem eine Abmessung des Gegenstands, insbesondere seine Länge, gemessen wird. Hierbei wird eine hohe Genauigkeit erzielt, da diese Abmessung unmittelbar nach dem Ausrichten des Gegenstands ermittelt wird, ohne daß zwischen Ausrichten und Messen weitere Verfahrensschritte durchgeführt werden, welche die für die Messung ausschlaggebende Ausrichtung des Gegenstands beeinflussen können. Insbesondere wird der Gegenstand zumindest mit dem Teil, der gerade der Messung unterliegt, auf dem Zuführband belassen. Vorzugsweise wird die Messung der Erstreckung des Gegenstands durchgeführt, während der Gegenstand sich noch vollständig auf dem Zuführband befindet.

Der Gegenstand kann auf dem Zuführband ausgerichtet werden, während das Zuführband und somit der Gegenstand stillsteht. Dadurch wird eine besonders hohe Genauigkeit der Ausrichtung erzielt und die Position des Gegenstands bezüglich des Zuführbands wird in der Bewegungsrichtung des Zuführbands kaum oder nur geringfügig verändert.

Allerdings ist es auch möglich, das Ausrichten des Gegenstands durchzuführen, während dieser mittels des Zuführbands transportiert wird. Dadurch ist eine besonders effiziente und kontinuierliche Materialzufuhr in Richtung der Bearbeitungseinrichtung möglich.

Auch die Messung der Erstreckung des Gegenstands wird vorzugsweise während des Transports des Gegenstands auf dem Zuführband durchgeführt, so daß ein im wesentlichen kontinuierlicher Transport von Gegenständen auf dem Zuführband gewahrt bleibt. Allerdings kann das Zuführband mit dem darauf aufliegenden Gegenstand zur Durchführung der Messung auch gestoppt werden.

Es ist von Vorteil, wenn die genannte Messung berührungslos durchgeführt wird, und zwar mit Hilfe elektronischer Sensoren, insbesondere wenigstens einer Lichtschranke. In diesem Fall wird nämlich die Position des Gegenstands bezüglich des Zuführbands durch die Messung nicht beeinflußt. Dies erhöht die Genauigkeit der Messung und kann die weitere Bearbeitung des Gegenstands erleichtern. Außerdem ist dieses Verfahren mechanisch unaufwendig und erleichtert - falls es sich bei dem Gegenstand um ein Lebensmittelprodukt handelt - die Einhaltung von hygienischen Bestimmungen.

Die Ermittlung der Abmessung des Gegenstands in der Bewegungsrichtung des Zuführbands kann mit Hilfe von Lichtschranken besonders vorteilhaft durchgeführt werden durch das in Anspruch. 6 beschriebene Verfahren, oder indem während des Transports des Gegenstands auf dem Zuführband eine Weglänge oder eine dieser Weglänge entsprechende Schrittzahl bestimmt wird, um die das Zuführband mit dem darauf befindlichen Gegenstand bewegt bzw. angetrieben wird zwischen dem Unterbrechen einer Lichtschranke durch den heran bewegten Gegenstand einerseits, und dem nachfolgenden Freigeben der Lichtschranke durch den weg bewegten Gegenstand andererseits.

Es ist bevorzugt, wenn das Zuführband mit dem darauf aufliegenden Gegenstand um jeweils definierte Weglängen bewegt wird, so daß stets Kenntnis über die momentane Position des Zuführbands bzw. des Gegenstands erlangt werden kann. Diese Antriebsweise kann die Genauigkeit der Vorbereitung des Bearbeitens des Gegenstands erhöhen und kann außerdem - wie vorstehend erläutert - für die Messung der Erstreckung des Gegenstands verwendet werden. Ferner kann die Bewegung des Zuführbands bzw. des Gegenstands zumindest zeitweise in separaten Transportschritten erfolgen, also mit sukzessivem Anfahren und Wiederanhalten, entsprechend einer erforderlichen Zufuhr des Gegenstands an die Bearbeitungseinrichtung.

Nach einer Weiterbildung des erfindungsgemäßen Verfahrens kann der Gegenstand oder zumindest sein bereits abgemessener Teil auf ein sich in Bewegungsrichtung des Zuführbands anschließendes Bearbeitungsband überführt werden, durch das er in Richtung der Bearbeitungseinrichtung oder zu dieser hin transportiert wird. Bei diesem Überführen werden die Bewegung des Zuführbands und jene des Bearbeitungsbands zumindest während der Dauer des Überführungsvorgangs miteinander synchronisiert; insbesondere werden die Geschwindigkeiten der beiden Bänder einander angeglichen.

Durch die Verwendung dieser beiden Bänder ist die für das Ausrichten und Vermessen des Gegenstands erforderliche Bewegung des Zuführbands entkoppelt von der für weitere Vorbereitungsschritte oder eigentliche Bearbeitungsschritte erforderlichen Bewegung des Bearbeitungsbands. Dadurch können die den beiden Bändern jeweils zugeordneten Vorbereitungs- bzw. Bearbeitungsschritte unabhängig voneinander jeweils in optimierter Weise durchgeführt werden, so daß eine hohe Gesamtleistung des Bearbeitens und der Vorbereitung hierzu möglich ist.

Indem die beiden Bänder während des Überführens des Gegenstands miteinander synchronisiert werden, wird ein Verrutschen des Gegenstands bezüglich der beiden Bänder verhindert, und die Ausrichtung des Gegenstands sowie die Kenntnis seiner Position bleiben auch für weitere auf dem Bearbeitungsband durchzuführende Vorbereitungs- oder Bearbeitungsschritte erhalten.

Die Synchronisation des Überführens des Gegenstands sowie die weiteren Schritte zur Vorbereitung des Bearbeitens lassen sich auf vorteilhaft einfache Weise durchführen, wenn auch das Bearbeitungsband um definierte Weglängen und zumindest zeitweise um einzelne Transportschritte angetrieben wird.

Bei der genannten Weiterbildung des erfindungsgemäßen Verfahrens ist es von Vorteil, wenn die Bewegung des Zuführbands und die Bewegung des Bearbeitungsbands außerhalb der Dauer des Überführens eines Gegenstands derart relativ zueinander gesteuert werden, daß ein Gegenstand zu einem vor ihm auf dem Bearbeitungsband befindlichen Gegenstand im wesentlichen keinen oder lediglich einen geringen Abstand aufweist. Insbesondere kann das Zuführband außerhalb der Dauer des Überführens im Mittel schneller in Richtung der Bearbeitungseinrichtung bewegt werden als das Bearbeitungsband, um auf diese Weise den gegenseitigen Abstand aufeinanderfolgender Gegenstände zu verringern.

Dadurch ist möglich, Gegenstände auf dem Zuführband und dem Bearbeitungsband in jeweils unterschiedlichen Abständen anzuordnen und zu transportieren. Beispielsweise können die Gegenstände in großen Abständen zueinander auf das Zuführband gebracht werden, um dort nacheinander und unabhängig voneinander ausgerichtet und vermessen zu werden. Wenn diese Gegenstände dagegen auf dem Bearbeitungsband vergleichsweise geringe Abstände zueinander aufweisen, ist dennoch ein hoher und kontinuierlicher Materialfluß gewährleistet.

Alternativ zu der vorstehend beschriebenen Weiterbildung des erfindungsgemäßen Verfahrens kann der Gegenstand nach der genannten Messung mittels des Zuführbands direkt, d. h. ohne zwischengeschaltetes Bearbeitungsband, zu der Bearbeitungseinrichtung transportiert werden. Dies vermindert den Konstruktionsaufwand sowie den Platzbedarf einer für die Durchführung dieses Verfahrens erforderlichen Vorrichtung.

Die Aufgabe der Erfindung wird auch durch eine Vorrichtung gelöst, die zur Durchführung des erfindungsgemäßen Verfahrens geeignet ist. Diese Vorrichtung weist ein Zuführband auf, sowie Ausrichtmittel und eine Einrichtung zur Messung der genannten Erstreckung des Gegenstands, die dem Zuführband jeweils räumlich zugeordnet sind. Indem sowohl die Ausrichtmittel als auch die Meßeinrichtung gemeinsam am Zuführband angeordnet sind, sind - wie vorstehend erläutert - präzisere Messungen möglich, und der für die Vorrichtung benötigte Platzbedarf kann sich verringern.

Die Ausrichtmittel sind vorzugsweise dergestalt beschaffen, daß sie von den beiden Längsseiten des Zuführbands aus jeweils in Richtung des im wesentlichen entlang der Mitte des Zuführbands angeordneten Gegenstands betätigt werden können. Insbesondere weisen sie langgestreckte Bügel, Rollen mit im wesentlichen vertikaler Drehachse oder eine im wesentlichen geradlinigen Anordnung von derartigen Rollen auf.

Das Zuführband der für die Durchführung des erfindungsgemäßen Verfahrens verwendeten Vorrichtung ist vorzugsweise als Stegband ausgebildet. Dabei weist das Zuführband entlang seiner Bewegungsrichtung gleichmäßig voneinander beabstandete rippenförmige Stege auf, die sich an der Außenseite des Zuführbands senkrecht zu seiner Bewegungsrichtung über im wesentlichen die gesamte Breite des Zuführbands erstrekken. Der Abstand der Stege voneinander ist deutlich geringer gewählt als die Abmessung der zu transportierenden Gegenstände auf dem Zuführband. Durch die Ausgestaltung des Zuführbands als Stegband kann ein Gegenstand aufgrund verminderter Reibung auf besonders einfache Weise in einer Richtung quer zur Bewegungsrichtung des Zuführbands ausgerichtet werden, während die Position des Gegenstands bezüglich des Zuführbands in dessen Bewegungsrichtung, also senkrecht zu der Erstrekkungsrichtung der Stege, sich nicht leicht unbeabsichtigt ändert.

Die zur Durchführung der ersten Weiterbildung des erfindungsgemäßen Verfahrens vorgesehene Vorrichtung weist ferner ein Bearbeitungsband auf, das sich an das Zuführband in dessen Bewegungsrichtung anschließt. Dabei sind beiden Bändern Antriebsmittel zugeordnet, durch welche sie im wesentlichen in derselben Richtung bewegt werden können. Diese Antriebsmittel können beispielsweise Servomotoren oder Schrittmotoren umfassen, die eine Bewegung der Bänder in definierten Schritten ermöglichen.

Vorzugsweise sind die Oberseiten der beiden Bänder im wesentlichen auf derselben Höhe vorgesehen. Es ist jedoch auch möglich, das entgegen der gemeinsamen Bewegungsrichtung weisende Ende des Bearbeitungsbands höher anzuordnen als das in Bewegungsrichtung weisende Ende des Zuführbands. Dies erweist sich besonders vorteilhaft, wenn die Länge des Bearbeitungsbands kürzer gewählt ist als die Erstreckung des Gegenstands entlang der Bewegungsrichtung dieses Bands. In diesem Fall ragt der Gegenstand nämlich - wenn er von dem Zuführband auf das Bearbeitungsband überführt wird - mit seinem entgegen der Bewegungsrichtung der Bänder weisende Ende frei in der Luft, sobald sich ein Großteil des Gegenstands auf dem Bearbeitungsband befindet. Dadurch kann ab diesem Zeitpunkt das Zuführband unabhängig von der Bewegung des Bearbeitungsbands angetrieben werden, ohne die Position des Gegenstands auf dem Bearbeitungsband zu beeinflussen. Dies erleichtert die Steuerung von Zufuhr- und Bearbeitungsband und bedingt zudem eine Verkürzung der Gesamtlänge der Vorrichtung.

Weitere bevorzugte Ausführungsformen der Erfindung sind in den Unteransprüchen angegeben. Die Erfindung wird nachfolgend anhand von Ausführungsbeispielen unter Bezugnahme auf die Zeichnungen beschrieben; in diesen zeigen:
- Fig. 1a und b: eine schematische Seitenansicht bzw. Draufsicht einer Vorrichtung zur Durchführung des erfindungsgemäßen Verfahrens, und
- Fig. 2a und b: eine schematische Seitenansicht bzw. Draufsicht einer weiteren Vorrichtung zur Durchführung des erfindungsgemäßen Verfahrens.

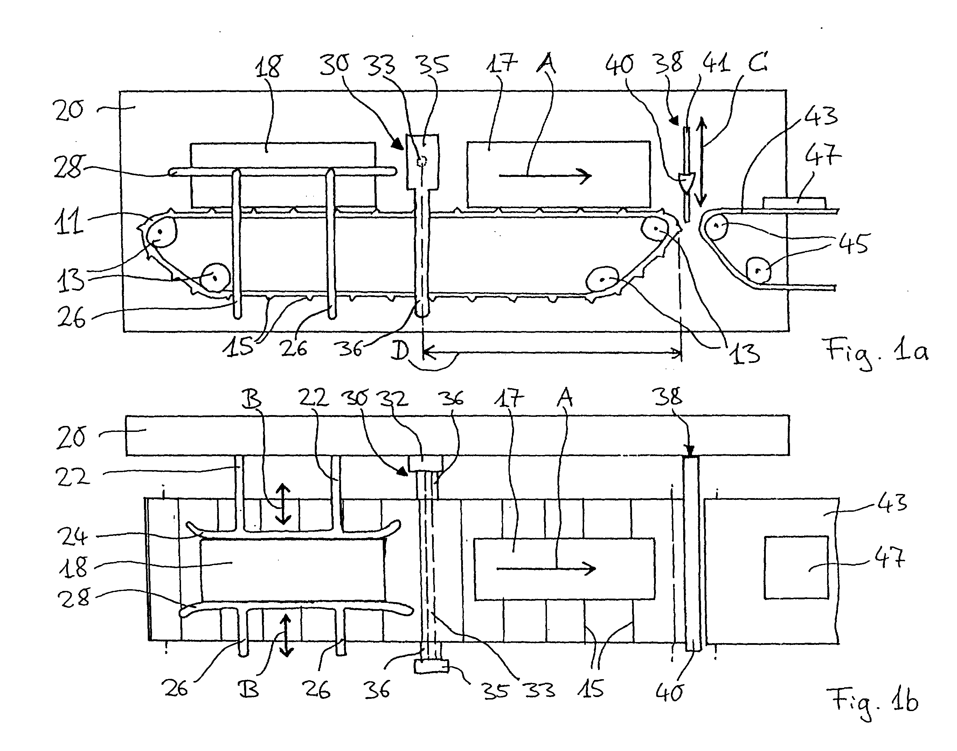

Die Fig. 1a und 1b zeigen schematisch in Seitenansicht bzw. Draufsicht ein endloses Zuführband 11, das mittels vier Antriebsrollen 13 aufgespannt und in einer Transportrichtung A antreibbar ist. Im Zusammenhang mit der Erfindung bezieht sich eine Angabe einer Richtung eines Antriebs oder einer Bewegung eines Transportbands jeweils auf dessen Oberseite.

Das Zuführband 11 ist als Stegband ausgebildet, indem es an seiner Außenseite angeformte, gleichmäßig voneinander beabstandete und senkrecht zur Richtung A verlaufende Stege 15 aufweist. Auf den Stegen 15 des Zuführbands 11 sind zwei quaderförmige Gegenstände 17, 18 bezüglich der Transportrichtung A ihrer Länge nach hintereinander angeordnet. Bei den Gegenständen 17, 18 handelt es sich um Käseriegel. Während die Stege 15 in der Darstellung gemäß Fig. 1a zur Verdeutlichung ihrer Funktion mit einem spitzkantigen Querschnitt gezeigt sind, können sie auch mit einem ausreichend runden bzw. flachen Querschnitt ausgebildet sein, um die Gegenstände 17, 18 nicht zu beschädigen.

Bezüglich der Darstellung gemäß Fig. 1a hinter dem Zuführband 11 ist eine Steuereinheit 20 angeordnet. Mit der Steuereinheit 20 sind zwei horizontal verlaufende, in der Darstellung gemäß Fig. la verdeckte, ausfahrbare Haltebügel 22 verbunden, an deren der Steuereinheit 20 gegenüberstehenden Enden ein langgestreckter, im wesentlichen in Transportrichtung A weisender Ausrichtbügel 24 angeformt ist.

Ferner verlassen unterhalb der Höhe der Unterseite des Zuführbands 11 zwei ausfahrbare Ausleger 26 die Steuereinheit 20 in horizontaler Richtung. Die Ausleger 26 erstrecken sich über die Breite des Zuführbands 11 hinaus, verlaufen jenseits der der Steuereinheit 20 abgewandten Längsseite des Zuführbands 11 in vertikaler Richtung nach oben bis über die Höhe der Oberseite des Zuführbands 11 hinaus und erstrecken sich dort ein kurzes Stück zurück in Richtung der Steuereinheit 20. An diesem Ende der Ausleger 26 ist ein weiterer im wesentlichen in Transportrichtung A verlaufender Ausrichtbügel 28 angeformt.

Die beiden Ausrichtbügel 24, 28 stehen sich parallel und beabstandet voneinander gegenüber, und ihre Enden sind dergestalt gekrümmt, daß sie jeweils von der Mitte des Zuführbands 11 weg weisen. Die Ausrichtbügel 24, 28 sind jeweils um einen Ausrichthub B senkrecht zur Transportrichtung A aus- und einfahrbar.

In Transportrichtung A bezüglich der Ausrichtbügel 24, 28 und in einem Abstand D von dem in Richtung A weisenden Ende des Zuführbands 11 ist eine Lichtschranke 30 angeordnet. Diese weist eine an der Steuereinheit 20 befestigte Sende- und Empfangseinheit 32 auf, die ungefähr auf Höhe der Ausrichtbügel 24, 28 in horizontaler Richtung und senkrecht zur Richtung A einen Lichtstrahl 33 aussendet. An der bezüglich der Sende- und Empfangseinheit 32 gegenüberliegenden Längsseite des Zuführbands 11 ist ein Reflektor 35 dergestalt angeordnet, daß er den Lichtstrahl 33 zurück auf die Sende- und Empfangseinheit 32 reflektiert. Der Reflektor 35 ist über einen seitlich vom Zuführband 11 und unterhalb desselben verlaufenden, starren L-Bügel 36 an der Steuereinheit 20 befestigt.

Dem in Transportrichtung A weisenden Ende des Zuführbands 11 unmittelbar benachbart ist eine Schneideinrichtung 38 angeordnet, die eine sich entlang der gesamten Breite des Zuführband erstreckende Schneidklinge 40 aufweist, welche entlang einer an der Steuereinheit 20 vorgesehenen vertikalen Führungsschiene 41 um einen Schneidhub C geführt werden kann.

In Transportrichtung A schließt sich an die Schneideinrichtung 38 auf vertikaler Höhe des Zuführbands 11 ein in den Fig. 1a und 1b nur teilweise dargestelltes Förderband 43 an. Dieses ist ebenfalls über Antriebsrollen 45 in Richtung A angetrieben. Auf dem Förderband 43 ist ein letztes Stück 47 eines vorangehend zerschnittenen Gegenstands zu erkennen.

Die Antriebsrollen 13, 45 des Zuführbands 11 bzw. des Förderbands 43 sind über in den Figuren 1a und 1b nicht dargestellte Antriebswellen mit der Steuereinheit 20 verbunden und antreibbar.

Die in den Fig. 1a und 1b dargestellte Vorrichtung dient zur Vorbereitung des Bearbeitens der Gegenstände 17, 18 in der Schneideinrichtung 38. Hierfür werden die Gegenstände 17, 18 dem Zuführband 11 in dessen Transportrichtung A zugeführt und mittels des Zuführbands 11 transportiert, indem dieses schrittweise, d. h. mit abwechselndem Anhalten und Wiederanfahren, oder kontinuierlich, d. h. ohne zwischengeschaltetes Wiederanhalten, angetrieben wird.

Sobald sich ein Gegenstand 18 bezüglich seiner Transportrichtung A auf Höhe der Ausrichtbügel 24, 28 befindet, steht das Zuführband 11 still, und die Ausrichtbügel 24, 28 bewegen sich von den beiden Längsrändern des Zuführbands 11 aus um jeweils den Ausrichthub B auf den Gegenstand 18 zu und richten ihn dabei auf dem noch stillstehenden Zuführband 11 entsprechend ihrer eigenen Erstreckung parallel zur Richtung A aus. Hierfür werden die Ausrichtbügel 24, 28 mittels ihrer Haltebügel 22 bzw. ihrer Ausleger 26 von in der Steuereinheit 20 enthaltenen Antriebsmitteln bewegt. Dieser Zeitpunkt, zu dem der Gegenstand 18 auf dem stillstehenden Zuführband 11 mittels der Ausrichtbügel 24, 28 ausgerichtet wird, ist in Fig. 1b dargestellt.

Nach seinem Ausrichten wird der Gegenstand 18 mittels des Zuführbands 11 weiter in Richtung A transportiert, wobei er zunächst mit seiner in Richtung A weisenden Seite (Vorderseite) den Lichtstrahl 33 der Lichtschranke 30 unterbricht. Bei andauerndem Weitertransport des Gegenstands 18 wird der Lichtstrahl 33 - nach Passieren der Rückseite des Gegenstands 18 - wieder freigegeben. Indem während dieses Transportvorgangs anhand in der Steuereinheit 20 enthaltener Antriebsmittel ermittelt wird, um welche Weglänge der Gegenstand 18 mittels des Zuführbands 11 und dessen Antriebsrollen 13 zwischen dem Unterbrechen und dem Wiederfreigeben des Lichtstrahls 33 bewegt wurde, kann die Länge des Gegenstands 18, also seine Erstreckung in Richtung A bestimmt werden.

Erst nachdem ein Gegenstand 17 die Lichtschranke 30 vollständig durchlaufen hat, gelangt er bei Weiterbewegung des Zuführbands 11 - wie in den Fig. 1a und 1b dargestellt - mit seiner in Transportrichtung A weisenden Seite auf Höhe der Schneideinrichtung 38. Von dieser wird der Gegenstand 17 bearbeitet, indem die Schneidklinge 40 ihn durch sukzessive Abwärts- und Aufwärtsbewegung entlang der Führungsschiene 41 in einzelne Stücke schneidet. Während eines solchen Schneidvorgangs steht das Zuführband 11 und somit der Gegenstand 17 still. Nach jedem Schneidvorgang wird der Gegenstand 17 mittels des Zuführbands 11 um einen der Breite eines zu schneidenden Stücks entsprechenden Transportschritt bewegt. Von dem Gegenstand 17 geschnittene Stücke kippen um 90° auf das Förderband 43, welches derartige Stücke in Richtung A wegfördert. Das letzte Stück 47 eines dem Gegenstand 17 vorangehenden Gegenstands ist in Fig. la und 1b zu erkennen.

Indem sowohl das Ausrichten des Gegenstands 18 mittels der Ausrichtbügel 24, 28 als auch die Bestimmung seiner Länge mittels der Lichtschranke 30 auf dem Zuführband 11 erfolgen, geschehen diese beiden Vorgänge mit geringem konstruktiven Aufwand und Platzbedarf, und es wird bei der Längenmessung eine hohe Genauigkeit erzielt. Der Gegenstand 18 vollzieht nämlich zwischen seinem Ausrichten und der Längenmessung keine weitere Bewegung bezüglich des Zuführbands 11, insbesondere keinen Wechsel auf ein anderes Band, auf dem dann erst die Längenmessung durchgeführt würde.

Da ferner der Abstand D zwischen dem Lichtstrahl 33 und dem in Transportrichtung A weisenden Ende des Zuführband 11 größer gewählt ist als die Länge eines Gegenstands 17, wird eine unbeabsichtigte, die Messung möglicherweise verfälschende Bewegung des Gegenstands 17 mittels der Schneideinrichtung 38 vermieden.

Indem das Zuführband 11 als Stegband mit quer zur Transportrichtung verlaufenden Stegen 15 ausgebildet ist, wird das zum Zwecke des Ausrichtens erfolgende seitliche Verrücken eines Gegenstands 18 senkrecht zur Transportrichtung A erleichtert, während seine Position auf dem Zuführband 11 bezüglich dessen Bewegungsrichtung A auch bei beschleunigendem oder verzögerndem Antrieb des Zuführbands 11 erhalten bleibt.

Die Erstreckung eines Gegenstands 17, 18 in Richtung A kann mittels der Lichtschranke 30 auf besonders einfache Weise ermittelt werden, wenn der Antrieb des Zuführbands 11 über die Antriebsrollen 13 mittels Servomotoren oder Schrittmotoren erfolgt, da in diesem Fall die jeweils erfolgte Bewegung des Zuführbands 11 aus Kenntnis der erfolgten Umdrehungen der Motoren leicht errechenbar ist.

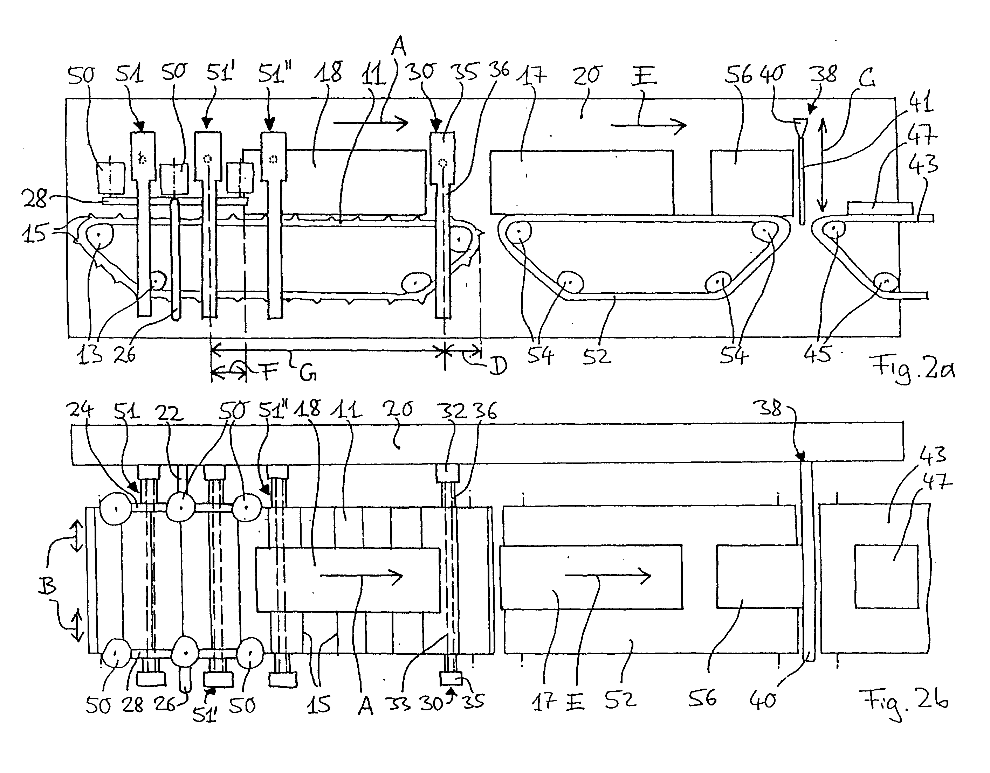

Die Fig. 2a und 2b zeigen eine weitere Vorrichtung zur Vorbereitung des Bearbeitens von Gegenständen 17, 18, 56, beispielsweise von Käseriegeln, in einer Schneideinrichtung 38, wobei dieselben Bezugszeichen wie in den Fig. 1a bzw. 1b jeweils gleiche oder gleichartige Teile bezeichnen. Insbesondere weist die Vorrichtung das mittels in der Steuereinheit 20 enthaltener Antriebsmittel in Richtung A angetriebene Zuführband 11 auf.

Die beiden an dem entgegen der Transportrichtung A weisenden Ende des Zuführbands 11 angeordneten und über den Haltebügel 22 bzw. den Ausleger 26 bezüglich der Steuereinheit 20 verfahrbaren Ausrichtbügel 24, 28 weisen an ihrer Oberseite jeweils drei Kontaktrollen 50 dergestalt auf, daß sich die drei Kontaktrollen 50 der einen Längsseite des Zuführbands 11 und die drei Kontaktrollen 50 der anderen Längsseite jeweils paarweise gegenüberstehen. Die Kontaktrollen 50 sind bezüglich einer vertikalen Rotationsachse drehbar gelagert und ragen mit ihrer Umfangsfläche in Richtung der Mitte des Zuführbands 11 jeweils über den Ausrichtbügel 24 bzw. 28 heraus.

In geringem Abstand D von dem in Richtung A weisenden Ende des Zuführbands 11 ist die Lichtschranke 30 angeordnet. Drei Auslöse-Lichtschranken 51, 51' und 51", die denselben Aufbau und dieselbe Ausrichtung besitzen wie die Lichtschranke 30, sind jeweils einem Paar einander gegenüberstehender Kontaktrollen 50 in Transportrichtung A benachbart angeordnet.

In Transportrichtung A schließt sich an das Zuführband 11 ein endloses Bearbeitungsband 52 dergestalt an, daß dessen Oberseite sich ungefähr auf derselben vertikalen Höhe befindet wie die Oberseite der Stege 15 des Zuführbands 11. Ähnlich dem Zuführband 11 ist auch das Bearbeitungsband 52 über vier Antriebsrollen 54 aufgespannt. Die Antriebsrollen 54 können über in den Figuren 2a und 2b nicht dargestellte Wellen durch in der Steuereinheit 20 befindliche, ebenfalls nicht dargestellte Antriebsmittel derart angetrieben werden, daß die Oberseite des Bearbeitungsbands 52 eine Transportbewegung E durchführt, die parallel zu der Transportrichtung A des Zuführbands 11 verläuft.

In der Transportbewegungsrichtung E schließen sich an das Bearbeitungsband 52 die Schneideinrichtung 38 und das nur teilweise dargestellte Förderband 43 an. Auf dem der Schneideinrichtung 38 benachbarten Abschnitt des Bearbeitungsbands 52 ist ein vorangehend bearbeiteter Gegenstand 56 gezeigt, der nur noch lediglich knapp die Hälfte seiner ursprünglichen Länge aufweist. Das zu dem der Darstellung gemäß Fig. 2a und 2b entsprechenden Zeitpunkt als letztes mittels der Schneideinrichtung 38 von dem Gegenstand 56 geschnittene und um 90° gekippte Stück 47 ist auf dem Förderband 43 zu erkennen.

Ein auf das Zuführband 11 gebrachter Gegenstand 18 wird zunächst dadurch für seine Bearbeitung vorbereitet, daß er mittels der Kontaktrollen 50 bezüglich der Transportrichtung A des Zuführbands 11 ausgerichtet wird. Hierfür wird der Gegenstand 18 mittels des Zuführbands 11 in Richtung A transportiert. Sobald das in Richtung A weisende Ende des Gegenstands 18 die jeweils ersten beiden Kontaktrollen 50 jedes Ausrichtbügels 24, 28, d.h. die beiden in der Darstellung gemäß Fig. 2a und 2b linken Paare einander gegenüberstehender Kontaktrollen 50, passiert hat, werden die Ausrichtbügel 24, 28 um jeweils ungefähr den Ausrichthub B aufeinander zu bewegt, so daß die genannten Kontaktrollen 50 an den beiden Längsseiten des weiterhin in Richtung A transportierten Gegenstands 18 anliegen. Somit wird der Gegenstand 18 während seines Weitertransports zunächst durch die insgesamt vier, und nachfolgend sechs Kontaktrollen 50 ausgerichtet.

Erst nachdem der Gegenstand 18 mit seinem entgegen der Transportrichtung A weisenden Ende das bezüglich der Richtung A hintere, also in der Darstellung gemäß Fig. 2a und 2b linke Paar einander gegenüberstehender Kontaktrollen 50 passiert hat, und noch bevor das in Richtung A weisende Ende des Gegenstands 18 auf Höhe der Lichtschranke 30 gelangt ist, werden die beiden Ausrichtbügel 24, 28 mit den Kontaktrollen 50 wieder von dem Gegenstand 18 weg in Richtung der Längsränder des Zuführbands 11 zurückgefahren.

Während des nachfolgenden Weitertransports des Gegenstands 18 in Richtung A wird seine Länge, d.h. seine Erstreckung parallel zur Richtung A, nach folgendem Prinzip gemessen:
Immer wenn der Gegenstand 18 mit seiner Rückseite, also mit seiner entgegen der Richtung A weisenden Seite, eine der drei Auslöse-Lichtschranken 51, 51', 51" passiert, diese also freigibt, wird ein Zähler rückgesetzt, d.h. mit einem definierten Startwert belegt, und zu einem fortdauernden Erfassen veranlaßt der ab diesem Zeitpunkt durch den Gegenstand 18 getätigten Bewegung bzw. Bewegungslänge in Transportrichtung A. Dieses Erfassen erfolgt insbesondere durch Messung der mittels der Antriebsrollen 13 auf das Zuführband 11 übertragenen Transportbewegung.

Wenn nachfolgend die Vorderseite des Gegenstands 18 die Lichtschranke 30 passiert, diese also unterbricht, wird der Zähler angehalten; die Lichtschranke 30 fungiert somit als End-Lichtschranke. Der somit erhaltene Zählerstand, der dem Abstand F der Rückseite des Gegenstands 18 von der zuletzt durchlaufenen und somit freigegebenen Auslöse-Lichtschranke 51, 51' bzw. 51" entspricht, wird mit dem aus dem Aufbau der Vorrichtung bekannten Abstand G zwischen der End-Lichtschranke 30 und dieser zuletzt durchlaufenen Auslöse-Lichtschranke 51, 51' bzw. 51" verrechnet, um die Länge des Gegenstands 18 zu erhalten.

In der Darstellung gemäß Fig. 2a und 2b ist dieser Meßvorgang zu einem Zeitpunkt gezeigt, zu dem der sich in Richtung A bewegende Gegenstand 18 die mittlere Auslöse-Lichtschranke 51' bereits durchquert und somit bereits zum zweiten Mal das Rücksetzen und Neustarten des genannten Zählers bewirkt hat, und kurz bevor er die End-Lichtschranke 30 unterbricht und den Meßvorgang somit beendet.

Erst nach Beendigung eines derartigen Meßvorgangs, also nachdem die Vorderseite eines Gegenstands 17 die Lichtschranke 30 passiert hat, wird er vom Zuführband 11 auf das Bearbeitungsband 52 überführt. Hierfür sind die beiden Bänder 11, 52 während der Dauer des Überführungsvorgangs bezüglich ihrer Bewegungsgeschwindigkeit synchronisiert, so daß der Gegenstand 17 nicht unbeabsichtigt verrutscht. Die Fig. 2a und 2b zeigen den Gegenstand 17 nach erfolgter Überführung auf das Bearbeitungsband 52.

Sobald der Gegenstand 17 sich vollständig auf dem Bearbeitungsband 52 befindet, wird er durch dieses mit einer von der Transportgeschwindigkeit des Zuführbands 11 unabhängigen Geschwindigkeit in Richtung E zu der Schneideinrichtung 38 transportiert. Diese schneidet in der im Zusammenhang mit den Fig. 1a und 1b beschriebenen Weise einzelne Stücke von dem Gegenstand, wobei dieser für jeden Schneidvorgang mittels des Bearbeitungsbands 52 um einen der Breite des zu schneidenden Stücks entsprechenden Transportschritt vorwärts bewegt und wieder angehalten wird. Der in den Fig. 2a und 2b gezeigte Gegenstand 56 ist bereits mehr als zur Hälfte mittels der Schneideinrichtung 38 auf diese Weise bearbeitet worden.

Mittels der in den Figuren 2a und 2b dargestellten Vorrichtung kann also die Länge eines Gegenstands 18 vorteilhaft auf äußerst präzise Weise bestimmt werden, da der Gegenstand 18 zunächst bezüglich seiner Transportrichtung A ausgerichtet und anschließend vermessen wird, ohne daß zwischen diesen beiden Vorgängen weitere Betätigungen an dem Gegenstand 18 durchgeführt werden, die seine Ausrichtung verändern und somit das Meßergebnis verfälschen können.

Aufgrund der Ausgestaltung der Ausrichtbügel 24, 28 mit Kontaktrollen 50 kann der Gegenstand 18 während seines andauernden Transports auf dem Zuführband 11 ausgerichtet werden. Es ist hierfür also kein Anhalten des Zuführbands 11 notwendig; somit erhöht dieses Verfahren vorteilhaft die Rate, mit der Gegenstände 17, 18 ausgerichtet und nachfolgend vermessen und bearbeitet werden können.

Um das Ausrichten des Gegenstands 18 zu erleichtern, und um mögliche Unebenheiten an den Längsseiten des Gegenstands 18 auszugleichen, können die Kontaktrollen 50 an den Ausrichtbügeln 24, 28 bezüglich einer Richtung senkrecht zur Transportrichtung A gefedert gelagert sein.

Indem einerseits das Messen und Ausrichten eines Gegenstands 18 auf dem Zuführband 11 erfolgen und andererseits ein Gegenstand 56 während seines Bearbeitens auf dem Bearbeitungsband 52 aufliegt, können entsprechend notwendige Transportbewegungen der Gegenstände 18, 56 unabhängig voneinander durchgeführt werden. Insbesondere kann ein Gegenstand 18 für sein Vermessen in kontinuierlicher Weise, also ohne zwischengeschaltetes Wiederanhalten des Zuführbands 11, bewegt werden. Dies erhöht die Genauigkeit der durch die Lichtschranken 30, 51, 51' und 51" vorgenommenen Längenmessung zusätzlich, da keine wiederholten Beschleunigungs- oder Verzögerungsvorgänge durchgeführt werden, welche die Position des Gegenstands 17 bezüglich des Zuführbands 11 möglicherweise unbeabsichtigt verändern.

Durch das vorstehend beschriebene Meßprinzip kann eine geringe Bautiefe des Zuführbands 11 in Richtung A erreicht werden, da die Rückseite eines Gegenstands 18 mittels einer der Auslöse-Lichtschranken 51, 51', 51" vergleichsweise nahe an dem entgegen der Richtung A weisenden Ende des Zuführbands 11 und seine Vorderseite mittels der End-Lichtschranke 30 an dem anderen, also in Richtung A weisenden Ende des Zuführbands 11 erfaßt wird. Umgekehrt muß also der Gegenstand 18 nicht, wie im Zusammenhang mit den Fig. 1a und 1b beschrieben, zum Beginn und Abschluß eines Meßvorgangs sowohl mit seiner Vorderseite als auch mit seiner Rückseite eine einzige Lichtschranke 30 durchlaufen. Dementsprechend kann die End-Lichtschranke 30 - wie in Fig. 2a und 2b gezeigt - einen lediglich geringen Abstand D von dem in Richtung A weisenden Ende des Zuführbands 11 aufweisen.

Außerdem ermöglicht dieses Meßprinzip insbesondere bei vergleichsweise langen Gegenständen 18 eine noch genauere Messung ihrer Länge. Hierfür muß nämlich ein Zählerstand ermittelt werden, der lediglich einer vergleichsweise geringen Transportweglänge entspricht, und zwar dem Abstand F der Rückseite des Gegenstands 18 von der zuletzt durchlaufenen Auslöse-Lichtschranke 51, 51' bzw. 51". Unter Wahrung dieses Vorteils kann die in den Fig. 2a und 2b dargestellte Vorrichtung durch entsprechende Anordnung und Beabstandung der Auslöse-Lichtschranken 51, 51', 51" leicht dem Vermessen von Gegenständen 18 von jeweils stark unterschiedlicher Länge angepaßt werden.

Indem Gegenstände 17, 18 auf zwei verschiedenen Bändern 11, 52 ausgerichtet und vermessen bzw. bearbeitet werden, können sie jeweils auf dem Zuführband 11 und dem Bearbeitungsband 52 in verschiedenen Abständen voneinander transportiert werden. Insbesondere ermöglicht folgendes Verfahren bei der in den Fig. 2a und 2b dargestellten Vorrichtung die Zufuhr von Gegenständen 17, 18, 56 an die Bearbeitungseinrichtung 38 mit besonders hoher Rate:

Nachdem ein Gegenstand 17, 18 vom Zuführband 11 auf das Bearbeitungsband 52 synchronisiert überführt worden ist, nachdem also die beiden Bänder zeitweise mit derselben Geschwindigkeit bewegt worden sind, wird das Zuführband 11 bis zum nächsten Überführungsvorgang im zeitlichen Mittel mit höherer Geschwindigkeit bewegt als das Bearbeitungsband 52. Dies wird zum Beispiel auf einfache Weise dadurch erreicht, daß das Zuführband über einen längeren Zeitraum, beispielsweise während der Längenmessung mittels der Lichtschranken 51, 51', 51", 30, kontinuierlich bewegt wird, während das Bearbeitungsband 52 in diesem Zeitraum zur schrittweisen Zufuhr eines Gegenstands 56 an die Schneideinrichtung 38 in entsprechenden Transportschritten bewegt wird.

Auf diese Weise ist es möglich, die Gegenstände 17, 18 auf dem Zuführband in vergleichsweise großen Abständen zueinander zu führen, was das präzise Vermessen der Gegenstände 17,18 jeweils unabhängig voneinander ermöglicht. Beispielsweise ist es möglich, einen weiteren Gegenstand erst zu oder nach einem Zeitpunkt auf das Zuführband 11 zu überführen, zu dem das Vermessen eines vorhergehenden Gegenstands 18 - wie in Fig. 2a und 2b gezeigt - bereits fast oder vollständig abgeschlossen ist.

Gleichzeitig können die Gegenstände 56, 17 auf dem Bearbeitungsband 52 in vergleichsweise geringen Abständen zueinander transportiert werden. Dies ermöglicht eine hohe und kontinuierliche Rate des Transports von Gegenständen 56, 17 auf dem Bearbeitungsband 52 bzw. der Bearbeitung dieser Gegenstände 56, 17 in der Schneideinrichtung 38.

Das im Zusammenhang mit den Fig. 2a und 2b erläuterte Meßprinzip kann dahingehend abgewandelt werden, daß ein Gegenstand 18 zum Starten des Meßvorgangs mit seiner in Transportrichtung A weisenden Seite, d.h. seiner Vorderseite, jeweils eine von mehreren Auslöse-Lichtschranken unterbricht, und daß er schließlich mit seiner entgegen der Transportrichtung A weisenden Seite, d.h. seiner Rückseite, eine End-Lichtschranke freigibt, um somit den Meßvorgang zu beenden.

Falls die Antriebsrollen 13, 54 des Zuführbands 11 bzw. des Bearbeitungsbands 52 mittels Servo- oder Schrittmotoren angetrieben werden, ist die Weglänge, um die das jeweilige Band 11 bzw. 52 bewegt worden ist, besonders leicht erfaßbar, und das synchronisierte Überführen eines Gegenstands 17 vom Zuführband 11 auf das Bearbeitungsband 52 kann auf besonders einfache Weise erfolgen.

Alternativ zu der in den Fig. 2a und 2b dargestellten Dimensionierung des Bearbeitungsbands 52 kann dieses bezüglich seiner Erstreckung in Transportrichtung E kürzer ausgebildet sein, als ein zu transportierender Gegenstand 17. Dadurch läßt sich eine noch geringere Gesamtlänge der Vorrichtung erreichen. Gegebenenfalls muß das Zuführband 11 während des Überführens des Gegenstands 17 auf das Bearbeitungsband 52 mit einer solchen Bewegung des Bearbeitungsband 52 synchronisiert werden, die bereits an die Bearbeitung des in Transportrichtung E weisenden Endes des Gegenstands 17 in der Schneideinrichtung 38 angepaßt ist.

Außerdem kann die Oberseite des Bearbeitungsbands 52 um einen geringen oder - bei Verwendung eines entsprechenden Zwischentransportelements, beispielsweise einer um eine horizontal und senkrecht zur Transportrichtung A verlaufende Achse frei drehbaren Rolle - auch um einen deutlichen Abstand in vertikaler Richtung höher angeordnet sein als die Oberseite der Stege 15 des Zuführbands 11. Dadurch liegt ein Gegenstand 17, sobald sein überwiegender Teil auf das Bearbeitungsband 52 überführt ist, lediglich auf dem Bearbeitungsband 52 auf und wird allein mittels desselben transportiert. Somit kann bereits ab diesem Zeitpunkt das Zuführband 11 wieder unabhängig von dem Bearbeitungsband 52, d.h. ohne Synchronisation mit diesem, bewegt werden, was die flexible Steuerung der beiden Bänder 11, 52 erleichtert.

### Bezugszeichenliste

- 11: Zuführband
- 13: Antriebsrolle
- 15: Steg
- 17: Gegenstand
- 18: Gegenstand
- 20: Steuereinheit
- 22: Haltebügel
- 24: Ausrichtbügel
- 26: Ausleger
- 28: Ausrichtbügel
- 30: Lichtschranke
- 32: Sende- und Empfangseinheit
- 33: Lichtstrahl
- 35: Reflektor
- 36: Bügel
- 38: Schneideinrichtung
- 40: Schneidklinge
- 41: Führungsschiene
- 43: Förderband
- 45: Antriebsrolle
- 47: Stück
- 50: Kontaktrolle
- 51: Lichtschranke
- 51': Lichtschranke
- 51": Lichtschranke
- 52: Bearbeitungsband
- 54: Antriebsrolle
- 56: Gegenstand

- A: Transportrichtung des Zuführbands
- B: Ausrichthub
- C: Schneidhub
- D: Abstand
- E: Bewegungsrichtung des Bearbeitungsbands
- F: Abstand
- G: Abstand

## Patentansprüche

1. Verfahren zur Vorbereitung des Bearbeitens eines Gegenstands (17, 18) in einer Bearbeitungs-, insbesondere Schneideinrichtung (38),
**dadurch gekennzeichnet,**
daß zunächst der Gegenstand (17, 18) auf einem zu einer Bewegung in Richtung der Bearbeitungseinrichtung (38) antreibbaren Zuführband (11) bezüglich der Bewegungsrichtung des Zuführbands (11) ausgerichtet wird, und
daß anschließend die Erstreckung des Gegenstands (17, 18) in Bewegungsrichtung des Zuführbands (11) gemessen wird, während der Gegenstand (17, 18) sich zumindest teilweise auf dem Zuführband (11) befindet.

2. Verfahren nach Anspruch 1,
**dadurch gekennzeichnet,**
daß der Gegenstand (17, 18) auf dem Zuführband (11) ausgerichtet wird, während das Zuführband (11) stillsteht oder während er mittels des Zuführbands (11) transportiert wird, und/oder
daß das Zuführband (11) zumindest zeitweise in definierten Schritten angetrieben wird, und/oder
daß die genannte Erstreckung des Gegenstands (17, 18) gemessen wird, während der Gegenstand (17, 18) mittels des Zuführbands (11) transportiert wird.

3. Verfahren nach einem der vorstehenden Ansprüche,
**dadurch gekennzeichnet,**
daß die genannte Erstreckung des Gegenstands (17, 18) mit Hilfe wenigstens einer Lichtschranke (30) gemessen wird, insbesondere indem während des Transports des Gegenstands (17, 18) mittels des Zuführbands (11) eine Weglänge oder eine entsprechende Taktzahl bestimmt wird, um die das Zuführband (11) vom Unterbrechen der Lichtschranke (30) durch die Vorderseite des Gegenstands (17, 18) an bis zum Freigeben der Lichtschranke (30) durch die Rückseite des Gegenstands (17, 18) bewegt wird.

4. Verfahren nach einem der vorstehenden Ansprüche,
**dadurch gekennzeichnet,**
daß die genannte Erstreckung des Gegenstands (17, 18) mit Hilfe wenigstens einer Auslöse-Lichtschranke (51, 51', 51") und einer End-Lichtschranke (30) gemessen wird, insbesondere indem zunächst der mittels des Zuführbands (11) transportierte Gegenstand (17, 18) mit seiner Vorderseite alle Auslöse-Lichtschranken (51, 51', 51") unterbricht, anschließend das Freigeben jeder Auslöse-Lichtschranke (51, 51', 51") durch. die Rückseite des Gegenstands (17, 18) jeweils das Rücksetzen und Starten eines Zählers bewirkt, der Zähler die ab seinem Rücksetzen und Starten erfolgende Transportweglänge des Gegenstands (17, 18) erfaßt, der Zähler bei nachfolgendem Unterbrechen der End-Lichtschranke (30) durch die Vorderseite des Gegenstands (17, 18) angehalten wird und der erhaltene Zählerstand mit dem Abstand zwischen der End-Lichtschranke (30) und der zuletzt freigegebenen Auslöse-Lichtschranke (51, 51', 51") verrechnet wird.

5. Verfahren nach einem der vorstehenden Ansprüche,
**dadurch gekennzeichnet,**
daß der Gegenstand (17, 18) nach Messung seiner Erstreckung auf ein Bearbeitungsband (52) überführt wird, mittels dessen er in Richtung und/oder zu der Bearbeitungseinrichtung (38) transportiert wird, wobei die Bewegung des Zuführbands (11) und die des Bearbeitungsbands (52) zumindest während der Dauer des Überführens des Gegenstands (17, 18) miteinander synchronisiert werden.

6. Verfahren nach Anspruch 5,
**dadurch gekennzeichnet,**
daß das Bearbeitungsband (52) zumindest zeitweise in definierten Schritten angetrieben wird, und/oder
daß die Bewegung des Zuführbands (11) und die Bewegung des Bearbeitungsbands (52) außerhalb der Dauer des Überführens des Gegenstands (17) derart relativ zueinander gesteuert werden, daß der auf das Bearbeitungsband (52) überführte Gegenstand (17) zu einem vor ihm befindlichen Gegenstand (56) im wesentlichen keinen oder nur einen geringen Abstand aufweist, und/oder
daß das Zuführband (11) außerhalb der Dauer des Überführens eines Gegenstands (17, 18) auf das Bearbeitungsband (52) im wesentlichen schneller in Richtung der Bearbeitungseinrichtung (38) bewegt wird als das Bearbeitungsband (52).

7. Verfahren nach einem der Ansprüche 1 bis 4,
**dadurch gekennzeichnet,**
daß der Gegenstand (17, 18) nach Messung seiner Erstreckung mittels des Zuführbands (11) direkt zu der Bearbeitungseinrichtung (38) transportiert wird.

8. Vorrichtung zur Vorbereitung des Bearbeitens eines Gegenstands (17, 18) in einer Bearbeitungseinrichtung, insbesondere einer Schneideinrichtung (38),
gemäß einem Verfahren nach einem der vorstehenden Ansprüche, mit einem Zuführband (11) sowie mit dem Zuführband (11) zugeordneten Ausrichtmitteln und einer dem Zuführband (11) zugeordneten Meßeinrichtung.

9. Vorrichtung nach Anspruch 8,
**dadurch gekennzeichnet,**
daß die Ausrichtmittel von den beiden Längsseiten des Zuführbands (11) aus im wesentlichen aufeinander zu betätigbar sind, und/oder daß die Ausrichtmittel Bügel (24, 28), Rollen (50) oder eine lineare Anordnung von Rollen (50) aufweisen, und/oder
daß die Meßeinrichtung wenigstens einen elektronischen Sensor, insbesondere eine Lichtschranke (30) oder wenigstens eine Auslöse-Lichtschranke (51, 51', 51") und eine End-Lichtschranke (30), aufweist, und/oder
daß Servo- oder Schrittmotoren zum Antrieb des Zuführbandes (11) und/oder des Bearbeitungsbandes (52) vorgesehen sind, und/oder daß das Zuführband (11) als Stegband (15) ausgebildet ist, und/oder
daß ein dem Zuführband (11) in dessen Bewegungsrichtung benachbart angeordnetes Bearbeitungsband (52) vorgesehen ist, wobei das Bearbeitungsband (52) vorzugsweise kürzer ist als der Gegenstand (17, 18).

10. Verfahren bzw. Vorrichtung nach einem der vorstehenden Ansprüche,
**dadurch gekennzeichnet,**
daß es sich bei dem Gegenstand (17, 18, 56) um ein im wesentlichen langgestrecktes Lebensmittelprodukt handelt, insbesondere um einen Käseriegel.
